# EUROPÄISCHE PATENTSCHRIFT

(11) **EP 2 956 682 B1**
(45) Veröffentlichungstag und Bekanntmachung des Hinweises auf die Patenterteilung: **23.05.2018**
(21) Anmeldenummer: 14702607.4
(22) Anmeldetag: 04.02.2014
(51) Int. Cl.: B23K 20/12, B23K 35/02, B29C 65/06, B29C 65/10, B29C 65/72, B29L 1/00, F16B 37/06, F16B 37/12, B23K 103/04, B23K 103/12, B23K 103/16, B23K 103/18

(54) **REIBSCHWEISSELEMENT UND VERBINDUNGSVERFAHREN FÜR DAS REIBSCHWEISSELEMENT MIT EINEM GEHÄUSE**
FRICTION WELDING ELEMENT, AND A METHOD FOR CONNECTING THE FRICTION WELDING ELEMENT TO A HOUSING
ÉLÉMENT DE SOUDAGE PAR FRICTION ET PROCÉDÉ DE LIAISON DE CET ÉLÉMENT DE SOUDAGE PAR FRICTION À UN BOÎTIER

(30) Priorität: 18.02.2013 DE 102013202583
(43) Veröffentlichungstag der Anmeldung: 23.12.2015
(73) Patentinhaber: Böllhoff Verbindungstechnik GmbH, 33649 Bielefeld (DE)
(72) Erfinder: STUMPF, Michael, 33611 Bielefeld (DE)
(74) Vertreter: HWP Intellectual Property
(86) Internationale Anmeldenummer: PCT/EP2014/052151
(87) Internationale Veröffentlichungsnummer: WO 2014/124841

(56) Entgegenhaltungen:
- EP-A2- 1 160 071
- WO-A2-03/046390
- DE-A1-102010 018 091
- DE-U1-202006 002 173
- US-A- 3 547 741
- US-A1- 2004 109 740
- US-A1- 2006 266 797

## Beschreibung

### 1. Gebiet der Erfindung

Die vorliegende Erfindung betrifft ein Reibschweißelement bestehend aus einer radial innen liegenden Verbindungsbuchse mit einem radial außen angeformten Reibschweißmantel. Des Weiteren betrifft die vorliegende Erfindung ein Gehäuse mit einem Kanal, in dem das erfmdungsgemäße Reibschweißelement mittels Reibschweißen, Ultraschallfügen oder Fügen mittels Heißgas befestigt worden ist. Zudem beschreibt vorliegende Erfindung ein Verbindungsverfahren zum reibschweißenden Befestigen des Reibschweißelements in dem Gehäuse.

### 2. Hintergrund der Erfindung

Es gibt verschiedene technische Anwendungen, um eine Verbindungsbuchse, wie beispielsweise einen Gewindeeinsatz, in einem Gehäuse zu befestigen. Wird beispielsweise ein derartiges Gehäuse in einem Kühlwasserkreislauf oder einem Hydraulikkreislauf einer Maschine eingesetzt, dient eine solche Verbindungsbuchse zum Anschluss einer flüssigkeitsführenden Leitung an das Gehäuse. Daraus folgt, dass die Verbindungsbuchse druckdicht in dem Gehäuse befestigt sein muss, damit keine Undichtigkeit in dem Wasser-, Öl-, Gas- oder Hydraulikkreislauf auftritt.

Derzeit werden metallische Gewindeeinsätze als Verbindungsbuchse in Kunststoffgehäusen auf verschiedene Weise installiert. Diese Gehäuse bestehen beispielsweise aus thermoplastischen Kunststoffen mit oder ohne Faserverstärkung.

Gemäß einer bekannten Herstellungsalternative wird die Verbindungsbuchse bei der Herstellung des Gehäuses in der Gehäuseform positioniert und dann mit dem ausgewählten Kunststoff umspritzt. Dies erfordert eine aufwendige Konstruktion der Form des Gehäuses, in der die Verbindungsbuchse nicht nur positionssicher gehalten, sondern auch mit Hilfe beispielsweise eines Kernstifts, verschlossen wird. Auf diese Weise wird neben dem Einformen in die Gehäusewand auch sichergestellt, dass das Innere der Verbindungsbuchse während des Herstellungsprozesses von Material freigehalten wird.

Des Weiteren besteht die Möglichkeit, die Verbindungsbuchse mit einem separaten Dichtring, beispielsweise einem O-Ring, auszustatten und in die Wand des Gehäuses einzupressen. Gemäß einer dritten Herstellungsalternative wird die metallische Verbindungsbuchse induktiv erwärmt und in die Gehäusewand eingebettet.

Mit den oben beschriebenen Herstellungsalternativen sind jedoch verschiedene Nachteile verbunden, die gerade die druckdichte Verbindung zwischen Gehäuse und Verbindungsbuchse negativ beeinflussen. Wird beispielsweise die Dichtfunktion hauptsächlich über den O-Ring realisiert, muss das Material des O-Rings unbedingt auf die durch die Verbindungsbuchse zu leitenden Flüssigkeiten abgestimmt sein. Andernfalls könnten aggressive Medien dazu führen, dass der O-Ring beschädigt und damit die Dichtigkeit verringert wird. Ein weiterer Nachteil besteht häufig darin, dass das O-Ring-Material der Temperaturbelastung während der Installation der Verbindungsbuchse und während der Nutzung der mit der Verbindungsbuchse hergestellten Verbindung standhalten muss. Bereits aus dem einzugehenden Materialkompromiss für den abdichtenden O-Ring resultiert, dass weder eine optimale Beständigkeit des O-Rings gegenüber aggressiven Medien noch eine optimale Temperaturbeständigkeit erzielt wird. Zudem ist es möglich, dass der Dichtring beim Einpressen aufgrund der auftretenden mechanischen Belastungen beschädigt wird. Ein weiterer Nachteil besteht darin, dass im Verlauf des Betriebs eines solchen Gehäuses mit Verbindungsbuchse und abdichtendem O-Ring dieser O-Ring altert und das Dichtringmaterial spröde wird. Diese Versprödung des Dichtringmaterials wirkt sich ebenfalls nachteilig auf die Dichtheit der hergestellten Verbindung aus.

EP 1 160 071 A2 beschreibt ein Reibschweißverfahren für ein stiftähnliches Gewindeelement. Hier wird zunächst das stiftähnliche Gewindeelement über sein Außengewinde in einer Reibschweißbuchse befestigt. Nachfolgend wird die Reibschweißbuchse über das stiftähnliche Gewindeelement gedreht und reibschweißend in einem Kanal befestigt. Der Kanal ist in einem Befestigungsdom, als Öffnung in einem Bauteil oder als Senke in einem Bauteil vorgesehen. Da das Drehmoment zum Reibschweißen von dem stiftähnlichen Gewindeelement auf die Reibschweißbuchse übertragen wird, schwächt diese mechanische Belastung die Verbindung zwischen stiftähnlichem Gewindeelement und Reibschweißbuchse. Dies wirkt sich nachteilig auf die abschließend herzustellende Verbindung zwischen stiftähnlichem Gewindeelement und Bauteil aus.

Ein Verfahren zum Befestigen eines Einsatzes an einem Bauteil aus einem Leichtbauwerkstoff isi in WO 03/046390 A2 beschrieben. Das Bauteil wird dazu mit einer Aussparung versehen, in die ein Körper aus thermoplastischem Material eingebracht wird. Der Einsatz wird zum Einführen in die Aussparung an einer Sonotrode befestigt, die zum Plastifizieren des thermoplastischen Materials und dadurch zur festen stoff- und/oder formschlüssigen Verbindung des Einsatzes mit dem Bauteil im Bereich der Aussparung verwendet wird.

US 2006/266797 A1 beschreibt ein Verfahren zur Erhöhung der Festigkeit und/oder Belastbarkeit von Werkstücken durch die Methode des Reibschweißens. Ein erstes Werkstück wird dabei zunächst mittels eines konventionellen Fertigungsverfahrens hergestellt. Nachfolgend wird das erste Werkstück im Bereich der zu erhöhenden Festigkeit und/oder zu erhöhenden Belastbarkeit mit einem Loch versehen. Danach wird in das Loch ein aus einem festigkeits- und/oder belastbarkeitserhöhenden Werkstoff bestehendes zweites Werkstück eingebracht. Schließlich wird in diesem Zustand das zweite Werkstück gegenüber dem ersten Werkstück nach der Methode des Reibschweißens relativ zueinander bis zum Erreichen der Schweißtemperatur unterhalb der Schmelztemperatur beider Werkstücke gerieben, sodass eine Reibschweißverbindung zwischen dem ersten Werkstück und dem zweiten Werkstück erfolgt.

Die US 3 547 741 A beschreibt ein Verfahren zum Anbringen eines Befestigungselements an einem thermoplastischen Körper. Das Befestigungselement wird unter Druck wenigstens teilweise in das Material des thermoplastischen Körpers eingepresst und gleichzeitig unter Anwendung von Reibungswärme im eingepressten Zustand mit dem thermoplastischen Material durch Schmelzschweißen verbunden.

Eine Mutter mit mindestens einer Bohrung ist in der DE 10 2010 018 091 A1 beschrieben. Hierbei ist ein Strukturelement vorgesehen, welches Federelemente aufweist. Die Federelemente sind elastisch federnd ausgestaltet und ragen in die Bohrung hinein. Zudem ist ein Gehäusekörper vorgesehen, welcher die Bohrung aufweist und in welchem das Strukturelement angeordnet ist.

Ein in einem Durchbruch einer Metallplatte einsetzbares Mutterteil ist in DE 20 2006 002 173 U1 beschrieben. Das Mutterteil besteht aus Kunststoff, ist für ein von einem Loch des Mutterteils aufnehmbares Befestigungsmittel vorgesehen und weist einen an der Metallplatte anlegbaren Flansch auf. In den Flansch ist ein koaxialer Metallring eingebettet, der mit einer Stirnseite mit der Oberfläche der Metallplatte in Berührungskontakt bringbar und bei Rotation des Mutterteils zusammen mit dem Metallring durch Reibschweißen mit der Metallplatte verbindbar ist.

Schließlich offenbart die US 2004/109740 A1 eine mit Gewinde versehene Befestigungsmutter. Die Mutter kann als eine Schweißmutter vorliegen, die mit Schweißvorsprüngen gebildet ist, die es der Mutter ermöglichen, an große Strukturelemente geschweißt zu werden, bevor das Zusammenwirken mit einem mit Gewinde versehenen Befestiger auftritt. Weiterhin kann die Mutter zusätzlich konvexe oder konkave oder andere taktile Merkmale aufweisen, die Vibrationen induzieren, wenn ein großer abweichender Winkel auftritt.

Es ist daher die Aufgabe vorliegender Erfindung, eine Verbindungsbuchse, wie beispielsweise eine Gewindebuchse, verlässlich und auf effiziente Weise an unterschiedlichen Stellen in einem Gehäuse und/oder in unterschiedlichen Gehäusen zu befestigen, so dass diese Verbindungsbuchse als Anschlusspunkt für unterschiedliche Zwecke nutzbar ist.

### 3 . Zusammenfassung der Erfindung

Die oben genannte Aufgabe wird durch ein Reibschweißelement gemäß dem unabhängigen Patentanspruch 1, ein Gehäuse mit mindestens einem darin befestigten Reibschweißelement gemäß dem unabhängigen Patentanspruch 9 sowie durch ein Verbindungsverfahren, mit dem eine Verbindungsbuchse eines Reibschweißelements in einem Kanal eines Gehäuses befestigbar ist, gemäß dem unabhängigen Patentanspruch 11 gelöst. Bevorzugte Ausführungsformen und Weiterentwicklungen vorliegender Erfindung gehen aus der folgenden Beschreibung, den begleitenden Zeichnungen sowie den anhängenden Ansprüchen hervor.

Das erfindungsgemäße Reibschweißelement, das mit einem Reibschweißverfahren in einem Kanal eines Gehäuses befestigbar ist, weist eine Verbindungsbuchse mit einer radialen Innenseite und einem an einer radialen Außenseite der Verbindungsbuchse angeformten Reibschweißmantel auf. Der Reibschweißmantel umfasst eine radial außen angeordnete Reibschweißkontur zum stoffschlüssigen Verbinden mit dem Gehäuse, die in axialer Richtung mindestens eine konisch geformte Abstufung umfasst sowie einen umfänglich angeordneten Kragen, der axial angrenzend an ein Ende der Verbindungsbuchse angeordnet ist und an einer der Reibschweißkontur abgewandten Kragenoberseite mindestens ein Antriebs- oder Kupplungsmittel zum Drehen des Reibschweißelements aufweist.

Um die Verbindungsbuchse, wie beispielsweise eine Gewindebuchse oder eine Buchse mit innen liegendem Bajonettverschluss oder Schnellverschluss, verlässlich in einem Gehäuse für beispielsweise ein Kühlsystem befestigen zu können, wird die Verbindungsbuchse an ihrer radialen Außenseite mit einem Reibschweißmantel ausgestattet. Dieser Reibschweißmantel wird gemäß einer Alternative angeformt, so dass er ausreichend auf der radialen Außenseite der Verbindungsbuchse befestigt ist. Dient die befestigte Verbindung einem Flüssigkeits- oder Gasanschluss, dann ist das Reibschweißelement gemäß dieser bevorzugten Ausführungsform drehfest und druckdicht im Gehäuse angeordnet. Zum Herstellen einer verlässlichen Verbindung zwischen Verbindungsbuchse und Reibschweißmantel weist die Verbindungsbuchse an ihrer radialen Außenseite eine Profilierung auf, vorzugsweise eine Rändelung oder eine schwalbenschwanzähnliche Ankerstruktur, mit deren Hilfe der Reibschweißmantel an der Verbindungsbuchse befestigt wird. Gerade diese konstruktive Ausgestaltung realisiert eine drehfeste und druckdichte Befestigung der Verbindungsbuchse im Reibschweißmantel und später im Gehäuse. Die Verbindungsbuchse kann sowohl dem Anschluss von Flüssigkeits- oder Gasleitungen wie auch der Schaffung eines Befestigungspunktes für Anbauteile dienen.

Der Reibschweißmantel besitzt eine radial außen angeordnete Reibschweißkontur, so dass die Verbindungsbuchse mittels Reibschweißen in dem Gehäuse befestigbar ist. Daraus folgt, dass die Verbindungsbuchse mit dem angeformten Reibschweißmantel das erfindungsgemäße Reibschweißelement bilden. Die Reibschweißkontur erstreckt sich umfänglich und in axialer Richtung der Verbindungsbuchse. Um mit Hilfe bekannter Reibschweißverfahren eine verlässliche Verbindung zwischen Reibschweißmantel und Gehäuse herstellen zu können, ist in axialer Richtung der Reibschweißkontur mindestens eine konisch geformte Abstufung vorgesehen. Diese konisch geformte Abstufung kann sich über die gesamte axiale Länge des Reibschweißmantels erstrecken oder der Reibschweißmantel weist ebenfalls bevorzugt eine Mehrzahl von konischen Abstufungen verteilt über die axiale Länge des Reibschweißmantels auf. Wird die Verbindungsbuchse mit einer derart geformten Reibschweißkontur in einen Kanal eines Gehäuses rotierend eingepresst, erzeugen die konisch geformten Flächen Reibungsflächen mit den Begrenzungswänden des Kanals des Gehäuses, an denen dann Material aufgeschmolzen und verbindend miteinander vermischt wird. Vorzugsweise ist der Kanal zylindrisch geformt. Gemäß einer weiteren Ausführungsform besitzt der Kanal eine geneigte radiale Innenwand in Form eines Konus, wobei die radiale Innenwand mit der Längsachse des Kanals einen Winkel im Bereich von größer 0° bis 20°, bevorzugt größer 0° bis 10°, einschließt.

Reibschweißverfahren nutzen eine Relativbewegung zwischen zwei aneinander zu befestigenden Bauteilen, durch die materialaufschmelzende Wärme mittels Reibung in aneinander anliegenden Oberflächenbereichen erzeugt wird. Diese Relativbewegung wird beispielsweise mittels Drehung zumindest eines der beiden Bauteile, durch eine schwingende Drehbewegung oder eine axiale Schwingung zwischen den Bauteilen oder durch eine Kombination dieser Bewegung, wie beispielsweise beim Orbital-Reibschweißen, erzeugt. Daher sind die hier verwendeten Begriffe "Reibschweißen" und "Reibschweißverfahren" nicht auf das drehende Reibschweißen beschränkt zu verstehen.

Der erfindungsgemäß umfänglich angeordnete Kragen als Bestandteil des Reibschweißmantels und vorzugsweise auch der Reibschweißkontur begrenzt zunächst das axiale Einsetzen des Reibschweißelements in den Kanal des Gehäuses. Des Weiteren stellt dieser Kragen Antriebsmittel bzw. eine Antriebskupplung bereit, so dass das Reibschweißelement im Rahmen eines Reibschweißverfahrens gedreht werden kann. Da diese Antriebsmittel vorzugsweise in dem Kragen versenkt angeordnet sind, ist beispielsweise nach Abschluss des Reibschweißverfahrens eine bündige Anordnung des Kragens mit dem übrigen Gehäuse bevorzugt.

Da der umfänglich angeordnete Kragen zusätzlich zur axial verlaufenden Reibschweißkontur Reibungsflächen und Berührungspunkte mit dem Gehäuse bereitstellt, findet auch an diesen Stellen ein Aufschmelzen des Materials durch Reibung sowie ein Verbinden zwischen Reibschweißelement und Gehäuse statt. Dies gewährleistet in Ergänzung zum übrigen verbindenden Reibschweißmantel die verlässliche und druckdichte Verankerung der Verbindungsbuchse im Gehäuse.

Gemäß einer bevorzugten Konstruktion des Reibschweißelements weist die Reibschweißkontur mindestens einen ersten und einen zweiten zylindrischen Bereich auf, die über die mindestens eine konisch geformte Abstufung miteinander verbunden sind. Diese mindestens zwei zylindrischen Bereiche dienen einer verbesserten Verbindung zwischen dem Reibschweißelement und dem zylindrischen Kanal des Gehäuses. Vorzugsweise wird nämlich ein Außendurchmesser des ersten zylindrischen Bereichs größer und ein Außendurchmesser des zweiten zylindrischen Bereichs kleiner als ein Innendurchmesser des Kanals des Gehäuses ausgebildet. Basierend auf dieser konstruktiven Ausgestaltung wird gerade der erste zylindrische Bereich des Reibschweißmantels während des Reibschweißverfahrens und dem rotierenden Einführen des Reibschweißelements in den zylindrischen Kanal des Gehäuses aufgeschmolzen und trägt zur Herstellung der Verbindung zwischen Reibschweißelement und Gehäuse bei. Der zweite zylindrische Bereich des Reibschweißmantels ist aufgrund seines Außendurchmessers von der zylindrischen Innenwand des Kanals des Gehäuses radial beabstandet. Basierend auf dieser Konstruktion wird beim drehenden Einführen des zweiten zylindrischen Bereichs in den Kanal das Reibschweißelement noch nicht mit einem Torsionsmoment belastet. Beim anschließenden Reibschweißen und Plastifizieren von Material des Reibschweißmantels und/oder des Gehäuses wird dieses Material vorzugsweise in diesen Spalt zwischen Kanalwand und dem zweiten zylindrischen Bereich des Reibschweißmantels verdrängt. Sobald dieses verdrängte Material in diesem Spalt aushärtet, trägt es zur Abdichtung der Verbindung zwischen Reibschweißelement und Gehäuse bei, so dass neben den Schweißbereichen zusätzliche Dichtbereiche vorliegen.

Gemäß einer weiteren bevorzugten Ausführungsform schließt die konische Abstufung des Reibschweißmantels mit der Längsachse des Reibschweißelements einen Winkel >90° ein. Die Anordnung dieser konischen Abstufung unterstützt das rotierende Einführen des Reibschweißelements in den Kanal des Gehäuses. Gemäß einer weiteren bevorzugten Ausgestaltung des Reibschweißelements ist die der Reibschweißkontur zugewandte Kragenunterseite in radialer Richtung senkrecht geneigt zur Längsachse des Reibschweißelements angeordnet. Da die Kragenunterseite dem Gehäuse zugewandt ist, stellt sie auch nach ausreichendem Eindringen des Reibschweißelements in den Kanal des Gehäuses eine Reibschweißfläche bereit. Sofern an diese Kragenunterseite Material aufgrund der durch Reibung erzeugten Wärme aufgeschmolzen wird, verbindet es sich mit dem aufgeschmolzenen Material des Gehäuses in diesem Bereich.

In weiterer bevorzugter Ausgestaltung der Kragenunterseite des Reibschweißmantels schließt die Kragenunterseite mit der Längsachse des Reibschweißelements einen Winkel <90° ein. Diese bevorzugte winklige Anordnung der Kragenunterseite führt dazu, dass durch Wärme aufgeweichtes Material radial einwärts verdrängt wird. Diese gerichtete Materialverdrängung in radialer Richtung zur Verbindungsbuchse und dem Reibschweißmantel unterstützt die Herstellung der Verbindung zwischen Reibschweißelement und Gehäuse sowie eine ausreichende Abdichtung dieser Verbindung zugunsten ihres späteren Einsatzes.

Während die Verbindungsbuchse bevorzugt aus Metall, wie beispielsweise Edelstahl, Messing oder einer anderen Legierung besteht, wird der Reibschweißmantel aus einem thermoplastischen Kunststoff mit oder ohne Faserverstärkung hergestellt. In Kombination dazu besteht das Gehäuse vorzugsweise ebenfalls aus einem thermoplastischen Kunststoff mit oder ohne Faserverstärkung. Als beispielgebende Werkstoffe sind Polypropylen (PP), Polyamid mit einem Glasfaseranteil (PA 6.6 GF 30) oder Polyamid (PA) ohne Glasfaserverstärkung bevorzugt. Allgemein wird ein Stoffschluss durch die Verwendung von identischen oder kompatiblen Kunststoffen für das Reibschweißelement und das Gehäuse erzielt. Daher sind ebenfalls folgende Werkstoffe oder Mischungen (Polyblends) davon zur Herstellung des Gehäuses und des Reibschweißmantels bevorzugt: Polycarbonat als schlagzähes Thermoplast (PC+ABS), PC/ABS, PC+ABS/PC und ABS+ABS/PC. Es ist des Weiteren denkbar, ein Duroplast zur Herstellung des Gehäuses vorzusehen. Während des Reibschweißverfahrens stellt dann der aus einem Thermoplast bestehende Reibschweißmantel vorzugsweise eine Polymerverkrallung zu dem duroplastischen Gehäuse her, so dass auch dadurch eine verlässliche Verbindung erzielt wird. Sollten faserverstärkte Kunststoffe als Gehäuse und Reibschweißmantel genutzt werden, ist der Faseranteil im Reibschweißmantel vorzugsweise geringer oder gleich Null im Vergleich zum Material des Gehäuses.

Gemäß einer weiteren bevorzugten Ausgestaltung vorliegender Erfindung besteht neben der Verbindungsbuchse auch der Reibschweißmantel aus einem Metall, wie beispielsweise einem Metallspritz- oder -druckguss. Exemplarisch sind hier ein Zink- und ein Aluminiumdruckgussverfahren zu nennen, um den Reibschweißmantel an die Verbindungsbuchse anzuformen. In Abstimmung dazu ist das Gehäuse ebenfalls aus einem Metall, wie beispielsweise Zink oder Aluminium, hergestellt, so dass während des Verbindungsverfahrens eine metallische Reibschweißverbindung zwischen Reibschweißmantel und Gehäuse erzielt wird.

Vorliegende Erfindung umfasst zudem ein Gehäuse mit einem Kanal, in dem ein Reibschweißelement gemäß einer der oben beschriebenen Ausführungsformen mittels Reibschweißen befestigt worden ist. Gemäß einer weiteren bevorzugten Ausgestaltung ist die Kragenoberseite des Reibschweißelements fluchtend mit einem axialen Ende der Verbindungsbuchse angeordnet, so dass das Reibschweißelement ebenfalls bündig mit der Außenseite des Gehäuses in den Kanal mittels Reibschweißen einbringbar ist.
Vorliegende Erfindung umfasst des Weiteren ein Verbindungsverfahren, mit dem die Verbindungsbuchse des Reibschweißelements in einem Kanal des Gehäuses befestigbar ist. Dieses Verbindungsverfahren weist die folgenden Schritte auf: Anformen des Reibschweißmantels an einer radialen Außenseite der Verbindungsbuchse, der eine radial außen angeordnete Reibschweißkontur mit in axialer Richtung mindestens einer konisch geformten Abstufung und einen umfänglich angeordneten Kragen aufweist, der axial angrenzend an ein Ende der Verbindungsbuchse angeordnet ist und an einer der Reibschweißkontur abgewandten Kragenoberseite mindestens ein Antriebsmittel zum Relativbewegen des Reibschweißelements, vorzugsweise Drehen, aufweist, Relativbewegen, vorzugsweise Drehen des Reibschweißelements um seine Längsachse, des Reibschweißelements über die Antriebsmittel an der Kragenoberseite und Bewegen des relativbewegten, vorzugsweise drehenden, Reibschweißelements in axialer Richtung in den Kanal des Gehäuses, so dass eine stoffschlüssige Reibschweißverbindung zwischen dem Reibschweißelement und dem Gehäuse entsteht. Die genannte Relativbewegung zwischen Gehäuse und Reibschweißelement ist neben einer Drehung des Reibschweißelements auch über eine Drehschwingung, also eine über einen begrenzten Drehwinkel erfolgende Hin- und Herbewegung des Reibschweißelements in dem Kanal des Gehäuses, oder über eine axiale Schwingung, also eine axiale Hin- und Herbewegung des Reibschweißelements innerhalb des Kanals des Gehäuses, erzielbar. Gerade beim Einsatz von sehr kleinen Amplituden bei Drehschwingungen und/oder Axialschwingungen sind ebenfalls Reibschweißelemente befestigbar, die selbst nicht rotationssymmetrisch sind und/oder die in nicht rotationssymmetrischen Kanälen installiert werden sollen. Eine weitere Alternative besteht in der Kombination obiger Relativbewegungen oder einer Auswahl der Relativbewegungen, so dass eine relative Orbitalschwingung vorliegt.

In bevorzugter Ausgestaltung des oben beschriebenen Verbindungsverfahrens findet ein Aufschmelzen von Material für die Reibschweißverbindung durch Reibung zwischen der radialen Innenseite des Kanals und einem ersten und einem zweiten, bevorzugt mehreren, konischen Bereich des Reibschweißelements statt, wobei der erste und der zweite konische Bereich in Bezug auf die Längsachse des Reibschweißelements unterschiedlich und/oder entgegengesetzt geneigt sind.

Diese bevorzugte Ausgestaltung des Reibschweißmantels hat zur Folge, dass zusätzlich zur Herstellung einer Verbindung zwischen dem Reibschweißelement und dem Gehäuse das aufgeweichte Material in Spaltbereiche zwischen Reibschweißelement und dem Gehäuse gedrückt wird. An diesen Stellen trägt das aufgeweichte Material nach Abkühlung zur zusätzlichen Abdichtung der Verbindung zwischen Reibschweißelement und Gehäuse bei. Auf diese Weise ergänzen sich die Verbindungsbereiche und Dichtbereiche zwischen Reibschweißelement und Gehäuse.

### 4. Kurze Beschreibung der begleitenden Zeichnungen

Die vorliegende Erfindung wird unter Bezugnahme auf die begleitenden Zeichnungen näher erläutert. Es zeigen:
- Figur 1: eine Explosionsdarstellung einer bevorzugten Ausführungsform der Erfindung bestehend aus dem Reibschweißelement und dem Gehäuse,
- Figur 2: eine bevorzugte Ausführungsform des in dem Gehäuse installierten Reibschweißelements und

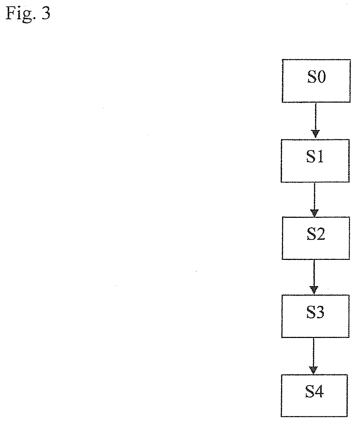

- Figur 3: ein Flussdiagramm zur Veranschaulichung der bevorzugten Ausführungsform des Verbindungsverfahrens.

### 5. Detaillierte Beschreibung der bevorzugten Ausführungsformen

Vorliegende Erfindung stellt ein Reibschweißelement 1 bestehend aus einer Verbindungsbuchse 10 und einem Reibschweißmantel 30 bereit. Das Reibschweißelement 1 ist mit einem Reibschweißverfahren in einem Kanal 52 eines Gehäuses 50 verlässlich befestigbar, vorzugsweise druckdicht und damit auch flüssigkeitsdicht. Vorliegende Erfindung wird am Beispiel eines zylindrischen Kanals 52 erläutert, in dem das Reibschweißelement 1 befestigt wird. Wie oben bereits erläutert worden ist, kann der Kanal 52 auch anders geformt sein. Zur Befestigung des Reibschweißelements 1 ist der zylindrische Kanal 52 beidseitig offen. Es ist ebenfalls bevorzugt, einen einseitig geschlossenen zylindrischen Kanal 52 zur Befestigung des Reibschweißelements 1 zu nutzen. In diesem Fall realisiert das reibgeschweißte Reibschweißelement 1 vorzugsweise einen Befestigungspunkt, um ein Anbauteil am Gehäuse 50 festzulegen.

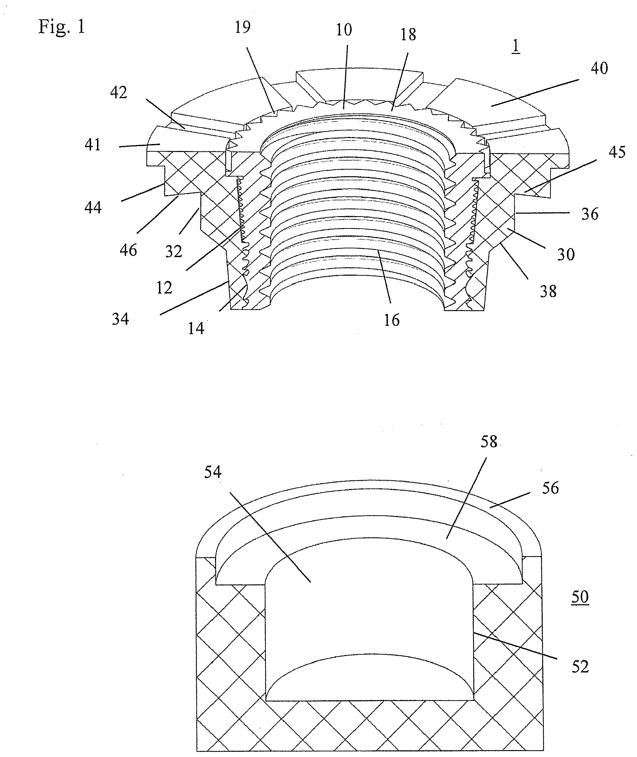

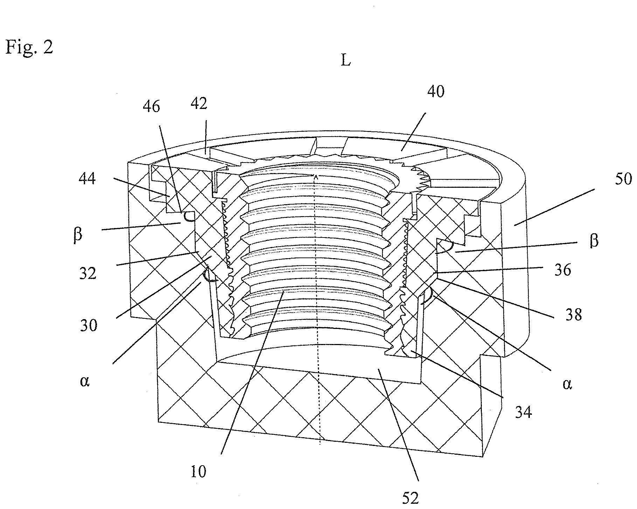

Eine bevorzugte Ausführungsform der Erfindung in einer Explosionsdarstellung bestehend aus dem erfindungsgemäß bevorzugten Reibschweißelement 1 und einem schematisch angedeuteten Gehäuse 50 zeigt Figur 1, während Figur 2 das Reibschweißelement 1 mittels Reibschweißen installiert im Gehäuse 50 darstellt.

Gemäß einer weiteren bevorzugten Ausführungsform vorliegender Erfindung besteht die Verbindungsbuchse 10 aus Metall und der daran an der radialen Außenseite angeformte Reibschweißmantel 30 aus Kunststoff. Gemäß unterschiedlicher bevorzugter Materialalternativen besteht der Reibschweißmantel 30 aus einem steifen und stabilen Kunststoff, wie beispielsweise Thermoplaste mit oder ohne Verstärkungsfasern, wie Polypropylen (PP), Polyamid (PA) und PA6.6 GF 30; Polycarbonat und Polyblends, wie PC/ABS, PC+ABS, PC+ABS/PC, ABS+ABS/PC. In Abstimmung mit dem Reibschweißmantel 30 besteht das Gehäuse 50 aus einem ähnlich stabilen oder dem gleichen Material wie der Reibschweißmantel 30. Es ist ebenfalls bevorzugt, dass das Gehäuse 50 aus einem Duroplast hergestellt ist, während der Reibschweißmantel 30 aus einem Thermoplast aufgebaut ist.

Die Eigenschaften der Erfindung werden im Weiteren am Beispiel eines Reibschweißmantels 30 und eines Gehäuses 50 aus Kunststoff erläutert.

Die Verbindungsbuchse 10, hier anhand einer Gewindebuchse beschrieben, hat ein Innengewinde 16, einen optionalen Buchsenkragen 18 sowie eine radiale Außenseite 12, 14. Anstelle des Innengewindes 16 ist es genauso bevorzugt, eine alternative Verbindungsstruktur vorzusehen. Dazu zählt beispielsweise ein Bajonettverschluss, eine Rastverbindung oder eine Steckverbindung.

Gemäß einer bevorzugten Ausführungsform vorliegender Erfindung ist die radiale Außenseite der Verbindungsbuchse 10 mit einem Profil 12; 14 versehen. Dieses Profil 12; 14 unterstützt den Halt des angeformten Reibschweißmantels 30. Bevorzugt wird an der gesamten radialen Außenseite das gleiche Profil oder es werden unterschiedliche Profile vorgesehen. So weist vorzugsweise der Bereich 12 eine äußere Rändelung auf, während im Bereich 14 ein Einlegerprofil angeordnet ist. Das Einlegerprofil besteht aus einer schwalbenschwanzähnlichen Struktur, in der sich der Reibschweißmantel 30 verhaken kann.

Das Profil oder die Profile an der radialen Außenseite der Verbindungsbuchse 10 haben den Vorteil, dass sie eine formschlüssige Verbindung mit dem angeformten Reibschweißmantel 30 ausbilden. Während des Anformens des Reibschweißmantels 30 an die Verbindungsbuchse 10 schrumpft das Material beim Abkühlen auf die an der radialen Außenseite der Verbindungsbuchse 10 vorhandenen Profile auf und wird auf diese Weise daran verankert. Dieser verlässliche Halt des Reibschweißmantels 30 an der Verbindungsbuchse 10 unterstützt das Verbinden des Reibschweißelements 1 mit dem Gehäuse 50 mittels Reibschweißen.

Ebenfalls die Verbindung zwischen der Verbindungsbuchse 10 und dem Reibschweißmantel 30 stabilisierend oder unterstützend wirkt der Buchsenkragen 18. Durch seine einen Absatz bildende Form verankert sich der Reibschweißmantel 30 zusätzlich an diesem Buchsenkragen 18. Dieser Effekt kann noch durch eine radial äußere Rändelung 19 am Buchsenkragen 18 unterstützt werden (siehe Fig. 1).

Der angeformte Reibschweißmantel 30 umfasst vorzugsweise einen umfänglich angeordneten Kragen 40. Dieser ist axial angrenzend an ein Ende der Verbindungsbuchse 10 angeordnet. Der Kragen 40 weist eine Kragenoberseite 41 und eine Kragenunterseite 45 auf, die vorzugsweise über einen einfach oder mehrfach abgestuften Bereich 44 miteinander verbunden sind.

In der Kragenoberseite 41 ist mindestens ein Antriebsmittel 42 vorgesehen. Dieses Antriebsmittel 52 besitzt die Form einer Vertiefung, einer Nut oder einer Bohrung, in die jeweils mithilfe einer Antriebskomponente eingegriffen werden kann. Durch Eingriff in das Antriebsmittel 42 ist eine Drehung auf das Reibschweißelement 1 übertragbar, um es reibschweißend im zylindrischen Kanal 52 des Gehäuses 50 zu befestigen. Die Anordnung des Antriebsmittels 42 auf der Kragenoberseite 41 gewährleistet eine direkte Kraft- und Drehmomenteinleitung in den Reibschweißmantel 30. Dadurch wird die Verbindungsbuchse 10 nicht mechanisch während des Reibschweißens belastet, sodass eine verlässliche Verbindung zwischen Verbindungsbuchse 10 und Reibschweißmantel 30 gewährleistet bleibt. Gemäß einer bevorzugten Ausführungsform vorliegender Erfindung schließt die Kragenoberseite 41 fluchtend mit dem axialen Ende der Verbindungsbuchse 10 ab. Sofern das Reibschweißelement 1 vollständig mit Kragen 40 im zylindrischen Kanal 52 des Gehäuses 50 installiert wird, ist eine fluchtende Anordnung des Kragens 40 mit der angrenzenden Gehäusewand 56 erzielbar. Natürlich ist es ebenfalls möglich, das Reibschweißelement 1 mit einem axialen Überstand über der Gehäusewand 56 im zylindrischen Kanal 52 des Gehäuses 50 zu befestigen.
Zur Befestigung des Reibschweißelements 1 im zylindrischen Kanal 52 weist das Reibschweißelement 1 an seiner radialen Außenseite eine Reibschweißkontur 32 auf. Die Reibschweißkontur 32 erstreckt sich in axialer Richtung des Reibschweißelements 1. Gemäß einer bevorzugten Ausführungsform ist die Reibschweißkontur 32 über seine gesamte Länge beim Kragen 40 beginnend konisch zulaufend geformt (nicht gezeigt). Eine weitere Ausführungsform umfasst eine Reibschweißkontur 32 mit mindestens einem ersten 34 und einem zweiten zylindrischen Bereich 36, die einen unterschiedlichen Außendurchmesser aufweisen. Die beiden zylindrischen Bereiche 34, 36 sind über einen ersten konischen Bereich 38 miteinander verbunden. Es ist ebenfalls bevorzugt, weitere zylindrische Bereiche in der Reibschweißkontur 32 zu realisieren, wobei der Übergang zwischen unterschiedlichen zylindrischen Bereichen durch einen weiteren konischen Bereich erfolgt.

Der erste konische Bereich 38 schließt vorzugsweise einen Winkel α> 90° mit der Längsachse L des Reibschweißelements 1 oder dem ersten zylindrischen Bereich 34 ein. Die zylindrischen Bereiche 34, 36 sind in ihrem Außendurchmesser an den Innendurchmesser des zylindrischen Kanals 52 angepasst. So ist vorzugsweise der Außendurchmesser des ersten zylindrischen Bereichs 34 kleiner als der Innendurchmesser des zylindrischen Kanals 52, während der Außendurchmesser des zweiten zylindrischen Bereichs 36 größer ist als der Innendurchmesser des zylindrischen Kanals 52. Aufgrund dieser Konstruktion der Reibschweißkontur 32 trifft beim Reibschweißen und drehenden sowie axialen Bewegen des Reibschweißelements 1 in den zylindrischen Kanal 52 der erste konische Bereich 38 auf die Wand des zylindrischen Kanals 52 an der Öffnung 54. Gleichzeitig bildet der erste zylindrische Bereich 34 einen Spalt mit der Innenwand des zylindrischen Kanals 52 aus. Während des Reibschweißens erzeugt die Reibung zwischen dem ersten konischen Bereich 38 und der Innenwand des zylindrischen Kanals 52 Wärme, die das Material der Innenwand des zylindrischen Kanals 52 und des ersten konischen Bereichs 38 aufweicht. Dadurch kann das Reibschweißelement 1 weiter in den zylindrischen Kanal 52 in axialer Richtung eindringen, sodass Reibung und damit plastisch verformbares Material an der Grenzfläche zwischen dem zweiten zylindrischen Bereich 32 und der Innenwand des zylindrischen Kanals 52 entsteht. Während der gleichzeitigen Drehung und axialen Bewegung des Reibschweißelements 1 in den zylindrischen Kanal 52 hinein vermischen sich die plastifizierten Werkstoffe von Reibschweißelement 1 und Gehäuse 50, werden verdichtet und durch den erste konische Bereich 38 in den Spalt zwischen dem zylindrischen Bereich 34 und der Wand des zylindrischen Kanals 52 verdrängt. Das verdrängte und plastisch verformbare Material wird durch den Spalt zwischen dem ersten zylindrischen Bereich 34 und der Innenwand des zylindrischen Kanals 52 aufgenommen. Nach Beendigung des Reibschweißen und Erstarren des Materials im Spalt trägt dieses in den Spalt verdrängte Material zur zusätzlichen Abdichtung der Verbindung zwischen Reibschweißelement 1 und Gehäuse 50 bei.

Eine weitere Abdichtung wird durch den Verbindungsbereich angrenzend an den ersten konischen Bereich 38 erzielt, nachdem das erwärmte Material ausgehärtet ist. Die Kragenunterseite 45 ist senkrecht oder in einem Winkel β ungleich 90° zur Längsachse L des Reibschweißelements 1 angeordnet. Gemäß einer weiteren bevorzugten Ausführungsform schließt die Kragenunterseite 45 mit der Längsachse L des Reibschweißelements 1 oder dem zweiten zylindrischen Bereich 36 einen Winkel β< 90° ein. Sobald die Kragenunterseite 45 während des Reibschweißens auf die Gehäusewand 58 trifft, wird das in dieser Reibungszone befindliche Material erwärmt, plastisch verformbar und durch die Neigung der Kragenunterseite 45 radial einwärts verdrängt. Somit staut sich das verdrängte Material an der Grenzfläche zwischen dem zweiten zylindrischen Bereich 36 und der Innenwand des zylindrischen Kanals 52. Auf diese Weise trägt dieses Material nach seiner Abkühlung als zusätzlicher Dichtbereich zur Abdichtung zwischen dem Reibschweißelement 1 und dem Gehäuse 50 bei.

Nachdem das Reibschweißelement 1 vollständig im zylindrischen Kanal 52 mittels Reibschweißen befestigt worden ist, bewirkt somit eine Kombination aus Schweiß- und Dichtbereichen eine druckdichte und verlässliche Verbindung zwischen Reibschweißelement 1 und Gehäuse 50.

Das bereits oben in Auszügen beschriebene Verfahren zum Verbinden der Verbindungsbuchse 10 mit dem Gehäuse 50 lässt sich daher mit folgenden Schritten zusammenfassen. Im Schritt 1 erfolgt das Anformen des Reibschweißmantels 30 mit Reibschweißkontur 32 an die radiale Außenseite der Verbindungsbuchse 10. Während des Anformens werden die vorteilhaften konischen Bereiche 38, 46 und die zylindrische Bereiche 34, 36 sowie der Kragen 40 oder eine beliebige Auswahl dieser konstruktiven Elemente in der Reibschweißkontur 32 ausgebildet.

In Schritt 2 wird das Reibschweißelement über die bevorzugten Antriebsmittel 42 relativbewegt bezogen auf das Gehäuse 50. Vorzugsweise besteht die Relativbewegung in einer Drehung des Reibschweißelements 1 um seine Längsachse L. Im Schritt 3 wird das sich relativbewegte, vorzugsweise drehende, Reibschweißelement in Richtung seiner Längsachse L in den zylindrischen Kanal 52 des Gehäuses 50 bewegt, sodass in den Berührungsbereichen zwischen Gehäuse 50 und Reibschweißmantel 30 verbindende Schweißbereiche entstehen. In den Bereichen, die plastisch verformbares verdrängtes Material aufnehmen, das nachfolgend erstarrt, entstehen zusätzliche Dichtbereiche. Diese unterstützten die Verbindung zwischen Gehäuse 50 und Reibschweißelement 1. Es erfolgt somit im Schritt 4 ein Aufschmelzen und gezieltes Verdrängen sowie stoffschlüssiges Verbinden von Material, sodass nach dem Erstarren des Materials die vorteilhafte Reibschweißverbindung zwischen Verbindungsbuchse 10 und Gehäuse 50 vorliegt.

Zur Unterstützung und Vorbereitung der Herstellung einer stoffschlüssigen Verbindung zwischen Gehäuse 50 und Reibschweißelement 1 wird vorzugsweise ein Vorwärmschritt S0 eingesetzt. Hierbei erfolgt mittels Ultraschall oder dem Einblasen von Heißgas ein Erwärmen der mittels Reibung zu plastifizierenden Oberflächenbereiche oder Teile davon, sodass der durch die Relativbewegung einzutragende plastifizierende Energiebetrag reduziert wird. Auf diese Weise wird der Reibschweißvorgang verkürzt, wodurch Prozesszeiten optimiert werden.

### Bezugszeichenliste

- 1: Reibschweißelement
- 10: Verbindungsbuchse
- 12: Äußere Rändelung
- 14: Einlegerprofl
- 16: Innengewinde
- 18: Buchsenkragen
- 30: Reibschweißmantel
- 32: Reibschweißkontur
- 34, 36: zylindrischer Bereich
- 38: erster konischer Bereich
- 40: Kragen
- 41: Kragenoberseite
- 42: Antriebsmittel
- 44: Abgestufter Bereich
- 45: Kragenunterseite
- 46: zweiter konischer Bereich
- 50: Gehäuse
- 52: Kanal
- 54: Öffnung
- 56, 58: Gehäusewand
- L: Längsachse

## Patentansprüche

1. Reibschweißelement (1), das mit einem Reibschweißverfahren in einem Kanal (52) eines Gehäuses (50) befestigbar ist und das die folgenden Merkmale aufweist:
eine Verbindungsbuchse (10) mit einer radialen Innenseite und einem an einer radialen Außenseite (14) der Verbindungsbuchse (10) angeformten Reibschweißmantel (30), der
eine radial außen angeordnete Reibschweißkontur (32) zum Verbinden mit dem Gehäusen (50) umfasst, **dadurch gekennzeichnet, dass** die Reibschweißkontur (32) in axialer Richtung mindestens eine konisch geformte Abstufung (38) aufweist, und
der Reibschweißmantel weiterhin einen umfänglich angeordneten Kragen (40) umfasst, der axial angrenzend an ein Ende der Verbindungsbuchse (10) angeordnet ist und an einer der Reibschweißkontur (32) abgewandten Kragenoberseite (41) mindestens ein Antriebsmittel (42) zum Drehen des Reibschweißelements (1) aufweist.

2. Reibschweißelement (1) gemäß Anspruch 1, in welchem die Reibschweißkontur (32) mindestens einen ersten (36) und einen zweiten zylindrischen Bereich (34) aufweist, die über die mindestens eine konisch geformte Abstufung (38) miteinander verbunden sind.

3. Reibschweißelement (1) gemäß Anspruch 2, in welchem die mindestens eine konische Abstufung (38) mit einer Längsachse (L) des Reibschweißelements (1) einen Winkel α> 90° einschließt.

4. Reibschweißelement (1) gemäß Anspruch 1, in welchem die Kragenoberseite (41) fluchtend mit einem axialen Ende der Verbindungsbuchse (10) angeordnet ist.

5. Reibschweißelement (1) gemäß einem der vorhergehenden Ansprüche, in welchem eine der Reibschweißkontur (32) zugewandte Kragenunterseite (45) in radialer Richtung senkrecht oder geneigt bezogen auf die Längsachse (L) des Reibschweißelements (1) angeordnet ist.

6. Reibschweißelement (1) gemäß Anspruch 5, in welchem die Kragenunterseite (45) mit der Längsachse (L) des Reibschweißelements (1) einen Winkel β< 90 ° einschließt.

7. Reibschweißelement (1) gemäß einem der vorhergehenden Ansprüche, in welchem der Reibschweißmantel (30) und das Gehäuse (50) aus Kunststoff und die Verbindungsbuchse (10) aus Metall bestehen.

8. Reibschweißelement (1) gemäß einem der Ansprüche 1 - 7, in welchem der Reibschweißmantel (30), die Verbindungsbuchse (10) und das Gehäuse (50) aus Metall bestehen.

9. Gehäuse (50) mit mindestens einem Kanal (52), in dem ein Reibschweißelement (1) gemäß einem der Ansprüche 1 - 6 mittels Reibschweißen befestigt ist.

10. Gehäuse (50) gemäß Anspruch 9 mit dem Reibschweißelement (1) gemäß Anspruch 2, in welchem ein Außendurchmesser des ersten zylindrischen Bereichs (32) größer und ein Außendurchmesser des zweiten zylindrischen Bereichs (34) kleiner als ein Innendurchmesser des Kanals (52) des Gehäuses (50) ausgebildet ist, so dass im ersten zylindrischen Bereich (32) ein verbindender Schweißbereich und im zweiten zylindrischen Bereich (34) ein Dichtbereich zwischen Reibschweißelement (1) und Gehäuse (50) vorliegt.

11. Verbindungsverfahren, mit dem eine Verbindungsbuchse (10) eines Reibschweißelements (1) in einem Kanal (52) eines Gehäuses (50) befestigbar ist und das die folgenden Schritte aufweist:
Anformen (S1) eines Reibschweißmantels (30) an einer radialen Außenseite der Verbindungsbuchse (10), der eine radial außen angeordnete Reibschweißkontur (32) mit in axialer Richtung mindestens einer konisch geformten Abstufung (38) und einen umfänglich angeordneten Kragen (40) aufweist, der axial angrenzend an ein Ende der Verbindungsbuchse (10) angeordnet ist und an einer der Reibschweißkontur (32) abgewandten Kragenoberseite (41) mindestens ein Antriebsmittel (42) zum Relativbewegen des Reibschweißelements (1), vorzugsweise Drehen, aufweist,
Relativbewegen, vorzugsweise Drehen (S2) um seine Längsachse (L), des Reibschweißelements (1) über die Antriebsmittel (42) an der Kragenoberseite (41) und
Bewegen (S3) des relativbewegten, vorzugsweise drehenden, Reibschweißelements (1) in axialer Richtung in den Kanal (52) des Gehäuses (50), so dass eine Reibschweißverbindung zwischen dem Reibschweißelement (1) und dem Gehäuse (50) entsteht.

12. Verbindungsverfahren gemäß Anspruch 11, mit dem weiteren Schritt
Aufschmelzen (S4) von Material für die Reibschweißverbindung durch Reibung zwischen einer radialen Innenseite des Kanals (52) und einem ersten (38) und einem zweiten konischen Bereich (46) des Reibschweißelements (1), wobei der erste (38) und der zweite konische Bereich (46) in Bezug auf die Längsachse (L) des Reibschweißelements (1) unterschiedlich geneigt sind.

13. Verbindungsverfahren gemäß Anspruch 12, indem der erste konische Bereich (38) mit der Längsachse (L) des Reibschweißelements (1) einen Winkel α> 90° und der zweite konische Bereich (46) mit der Längsachse (L) des Reibschweißelements (1) einen Winkel β< 90° einschließt.

14. Verbindungsverfahren gemäß einem der vorhergehenden Ansprüche 11 bis 13, das den weiteren Schritt aufweist:
Vorwärmen (S0) des Reibschweißelements (1) und/oder des Kanals (52) im Gehäuse (50), um die Herstellung einer Reibschweißverbindung zu unterstützen.

15. Verbindungsverfahren, mit dem eine Verbindungsbuchse (10) eines Reibschweißelements (1) gemäß einer der vorhergehenden Ansprüche 1 bis 8 in einem Kanal (52) eines Gehäuses (50) befestigbar ist und das die folgenden Schritte aufweist:
Relativbewegen, vorzugsweise Drehen (S2) um seine Längsachse (L), des Reibschweißelements (1) über die Antriebsmittel (42) an der Kragenoberseite (41) und
Bewegen (S3) des relativbewegten, vorzugsweise drehenden, Reibschweißelements (1) in axialer Richtung in den Kanal (52) des Gehäuses (50), so dass eine Reibschweißverbindung zwischen dem Reibschweißelement (1) und dem Gehäuse (50) entsteht.

16. Verbindungsverfahren gemäß Anspruch 15, mit dem weiteren Schritt
Aufschmelzen (S4) von Material für die Reibschweißverbindung durch Reibung zwischen einer radialen Innenseite des Kanals (52) und einem ersten (38) und einem zweiten konischen Bereich (46) des Reibschweißelements (1), wobei der erste (38) und der zweite konische Bereich (46) in Bezug auf die Längsachse (L) des Reibschweißelements (1) unterschiedlich geneigt sind.

17. Verbindungsverfahren gemäß Anspruch 16, indem der erste konische Bereich (38) mit der Längsachse (L) des Reibschweißelements (1) einen Winkel α> 90° und der zweite konische Bereich (46) mit der Längsachse (L) des Reibschweißelements (1) einen Winkel β< 90° einschließt.

18. Verbindungsverfahren gemäß einem der vorhergehenden Ansprüche 15 bis 17, das den weiteren Schritt aufweist:
Vorwärmen (S0) des Reibschweißelements (1) und/oder des Kanals (52) im Gehäuse (50), um die Herstellung einer Reibschweißverbindung zu unterstützen.

## Claims

1. Friction welding element (1) which is fastenable by means of a friction-welding method in a channel (52) of a housing (50) and which has the following features:
a connection bushing (10) having a radially inner side and a friction welding shell (30) formed on a radial outer side (14) of the connection bushing (10) comprising:
a radially outer friction welding contour (32) for connecting with the housing (50),
**characterized in that** the friction welding contour (32) has in the axial direction at least one conically shaped gradation (38), and
the friction welding shell comprises further a circumferentially arranged collar (40), which is arranged axially adjacent to an end of the connection bushing (10) and comprises at a collar top side (41) facing away from the friction welding contour (32) at least one drive means (42) for rotating the friction welding element (1).

2. Friction welding element (1) according to claim 1, in which the friction welding contour (32) comprises at least a first (36) and a second cylindrical portion (34) which are connected to each other by means of the at least one conically shaped gradation (38).

3. Friction welding element (1) according to claim 2, in which the at least one conical gradation (38) encloses with a longitudinal axis (L) of the friction welding element (1) an angle α > 90 °.

4. Friction welding element (1) according to claim 1, in which the collar top side (41) is aligned with an axial end of the connection bushing (10).

5. Friction welding element (1) according to one of the preceding claims, in which a collar bottom side (45) facing the friction welding contour (32) is arranged in the radial direction perpendicular or inclined with respect to the longitudinal axis (L) of the friction welding element (1).

6. Friction welding element (1) according to claim 5, in which the collar bottom side (45) encloses with the longitudinal axis (L) of the friction welding element (1) an angle β < 90°.

7. Friction welding element (1) according to one of the preceding claims, in which the friction welding shell (30) and the housing (50) consist of plastic and the connection bushing (10) consists of metal.

8. Friction welding element (1) according to one of the claims 1 to 7, in which the friction welding shell (30), the connection bushing (10) and the housing (50) consist of metal.

9. Housing (50) with at least one channel (52), in which a friction welding element (1) according to one of the claims 1 to 6 is fastened by means of friction welding.

10. Housing (50) according to claim 9 with the friction welding element (1) according to claim 2, in which an outer diameter of the first cylindrical portion (32) is formed larger and an outer diameter of the second cylindrical portion (34) is formed smaller than an inner diameter of the channel (52) of the housing (50) so that in the first cylindrical portion (32) a connecting welding portion and in the second cylindrical portion (34) a sealing portion is present between friction welding element (1) and housing (50).

11. Connection method by means of which a connection bushing (10) of a friction welding element (1) is fastenable in a channel (52) of a housing (50) and which comprises the following steps:
forming (S1) of a friction welding shell (30) at a radially outer side of the connection bushing (10) having a radially outer friction welding contour (32) with at least one conically shaped gradation (38) in the axial direction and a circumferentially arranged collar (40) which is arranged axially adjacent to an end of the connection bushing (10) and which comprises at a collar top side (41) facing away from the friction welding contour (32) at least one drive means (42) for relatively moving, preferably rotating, the friction welding element (1),
relatively moving, preferably rotating (S2) about its longitudinal axis (L), the friction welding element (1) by means of the drive means (42) on the collar top side (41), and
moving (S3) of the relatively moving, preferably rotating, friction welding element (1) in the axial direction into the channel (52) of the housing (50), so that a friction welding connection between the friction welding element (1) and the housing (50) is formed.

12. Connection method according to claim 11, comprising the further step:
melting (S4) of material for the friction welding connection by friction between a radially inner side of the channel (52) and a first (38) and a second conical portion (46) of the friction welding element (1), wherein the first (38) and the second conical portion (46) are inclined differently with respect to the longitudinal axis (L) of the friction welding element (1).

13. Connection method according to claim 12, wherein the first conical portion (38) encloses with the longitudinal axis (L) of the friction welding element (1) an angle α > 90 ° and the second conical portion (46) encloses with the longitudinal axis (L) of the friction welding element (1) an angle β < 90 °.

14. Connection method according to one of the preceding claims 11 to 13, comprising the further step:
preheating (S0) the friction welding element (1) and/or the channel (52) in the housing (50) to support the production of a friction welding connection.

15. Connection method by means of which a connection bushing (10) of a friction welding element (1) according to one of the preceding claims 1 to 8 is fastenable in a channel (52) of a housing (50) and which comprises the following steps:
relatively moving, preferably rotating (S2) about its longitudinal axis (L), the friction welding element (1) by means of the drive means (42) on the collar top side (41), and
moving (S3) of the relatively moving, preferably rotating, friction welding element (1) in the axial direction into the channel (52) of the housing (50), so that a friction welding connection between the friction welding element (1) and the housing (50) is formed.

16. Connection method according to claim 15, comprising the further step:
melting (S4) of material for the friction welding connection by friction between a radially inner side of the channel (52) and a first (38) and a second conical portion (46) of the friction welding element (1), wherein the first (38) and the second conical portion (46) are inclined differently with respect to the longitudinal axis (L) of the friction welding element (1).

17. Connection method according to claim 16, wherein the first conical portion (38) encloses with the longitudinal axis (L) of the friction welding element (1) an angle α > 90 ° and the second conical portion (46) encloses with the longitudinal axis (L) of the friction welding element (1) an angle β < 90 °.

18. Connection method according to one of the preceding claims 15 to 17, comprising the further step:
preheating (S0) the friction welding element (1) and/or the channel (52) in the housing (50) to support the production of a friction welding connection.

## Revendications

1. Élément de soudage par friction (1) apte à être fixé dans un canal (52) d'un boîtier (50) à l'aide d'un procédé de soudage par friction, et présentant les caractéristiques suivantes :
- un manchon de raccordement (10) avec un côté intérieur radial et une enveloppe de soudage par friction (30) formée sur un côté extérieur radial (14) du manchon de raccordement (10), lequel comporte un contour de soudage par friction (32) disposé radialement à l'extérieur pour être relié au boîtier (50),
**caractérisé en ce que** le contour de soudage par friction (32) présente au moins un gradin de forme conique (38) dans la direction axiale, et **en ce que**
- l'enveloppe de soudage par friction comporte en outre un col (40) disposé sur le pourtour, lequel est disposé de façon à être axialement adjacent à une extrémité du manchon de raccordement (10) et présente au moins un moyen d'entraînement (42) sur un côté supérieur de col (41) détourné du contour de soudage par friction (32), pour la rotation de l'élément de soudage par friction (1).

2. Élément de soudage par friction (1) selon la revendication 1, dans lequel le contour de soudage par friction (32) présente au moins une première (36) et une deuxième région cylindrique (34), lesquelles sont reliées l'une à l'autre par le biais d'au moins un gradin de forme conique (38).

3. Élément de soudage par friction (1) selon la revendication 2, dans lequel l'au moins un gradin conique (38) forme un angle α > 90° avec un axe longitudinal (L) de l'élément de soudage par friction (1).

4. Élément de soudage par friction (1) selon la revendication 1, dans lequel le côté supérieur de col (41) est disposé en affleurement avec une extrémité axiale du manchon de raccordement (10).

5. Élément de soudage par friction (1) selon l'une des revendications précédentes, dans lequel un côté inférieur de col (45) tourné vers le contour de soudage par friction (32) est disposé perpendiculairement ou de façon inclinée par rapport à l'axe longitudinal (L) de l'élément de soudage par friction (1) dans la direction radiale.

6. Élément de soudage par friction (1) selon la revendication 5, dans lequel le côté inférieur de col (45) forme un angle β < 90° avec l'axe longitudinal (L) de l'élément de soudage par friction (1).

7. Élément de soudage par friction (1) selon l'une des revendications précédentes, dans lequel l'enveloppe de soudage par friction (30) et le boîtier (50) sont constitués de plastique et le manchon de raccordement (10) est constitué de métal.

8. Élément de soudage par friction (1) selon l'une des revendications 1-7, dans lequel l'enveloppe de soudage par friction (30), le manchon de raccordement (10) et le boîtier (50) sont constitués de métal.

9. Boîtier (50) comprenant au moins un canal (52), dans lequel est fixé un élément de soudage par friction (1) selon l'une des revendications 1-6 par soudage par friction.

10. Boîtier (50) selon la revendication 9, comprenant l'élément de soudage par friction (1) selon la revendication 2, dans lequel un diamètre extérieur de la première région cylindrique (32) est conçu supérieur et un diamètre extérieur de la deuxième région cylindrique (34) est conçu inférieur à un diamètre intérieur du canal (52) du boîtier (50), de manière à obtenir une région de soudage de liaison dans la première région cylindrique (32) et une région d'étanchéité entre l'élément de soudage par friction (1) et le boîtier (50) dans la deuxième région cylindrique (34).

11. Procédé de liaison permettant de fixer un manchon de raccordement (10) d'un élément de soudage par friction (1) dans un canal (52) d'un boîtier (50) et présentant les étapes suivantes :
- moulage (S1) d'une enveloppe de soudage par friction (30) sur un côté extérieur radial du manchon de raccordement (10), laquelle présente un contour de soudage par friction (32) disposé radialement à l'extérieur avec au moins un gradin de forme conique (38) dans la direction axiale et un col (40) disposé sur le pourtour, lequel est disposé de façon à être axialement adjacent à une extrémité du manchon de raccordement (10) et présente au moins un moyen d'entraînement (42) sur un côté supérieur de col (41) détourné du contour de soudage par friction (32) pour le déplacement relatif de l'élément de soudage par friction (1), de préférence la rotation,
- déplacement relatif, de préférence par rotation (S2) autour de son axe longitudinal (L), de l'élément de soudage par friction (1) par le biais des moyens d'entraînement (42) sur le côté supérieur de col (41), et
- déplacement (S3) de l'élément de soudage par friction (1) déplacé de façon relative, de préférence par rotation, dans la direction axiale dans le canal (52) du boîtier (50), de manière à obtenir une liaison de soudage par friction entre l'élément de soudage par friction (1) et le boîtier (50).

12. Procédé de liaison selon la revendication 11, comprenant l'étape supplémentaire suivante :
- fusion (S4) de matériau pour la liaison de soudage par friction par friction entre un côté intérieur radial du canal (52) et une première (38) et une deuxième région conique (46) de l'élément de soudage par friction (1), la première (38) et la deuxième région conique (46) étant inclinées différemment par rapport à l'axe longitudinal (L) de l'élément de soudage par friction (1).

13. Procédé de liaison selon la revendication 12, dans lequel la première région conique (38) forme un angle α > 90° avec l'axe longitudinal (L) de l'élément de soudage par friction (1) et la deuxième région conique (46) forme un angle β < 90° avec l'axe longitudinal (L) de l'élément de soudage par friction (1).

14. Procédé de liaison selon l'une des revendications précédentes 11 à 13, présentant l'étape supplémentaire suivante :
- préchauffage (S0) de l'élément de soudage par friction (1) et/ou du canal (52) dans le boîtier (50), pour soutenir la fabrication d'une liaison de soudage par friction.

15. Procédé de liaison permettant de fixer un manchon de raccordement (10) d'un élément de soudage par friction (1) selon l'une des revendications précédentes 1 à 8 dans un canal (52) d'un boîtier (50) et présentant les étapes suivantes :
- déplacement relatif, de préférence par rotation (S2) autour de son axe longitudinal (L), de l'élément de soudage par friction (1) par le biais des moyens d'entraînement (42) sur le côté supérieur de col (41), et
- déplacement (S3) de l'élément de soudage par friction (1) déplacé de façon relative, de préférence par rotation, dans la direction axiale dans le canal (52) du boîtier (50), de manière à obtenir une liaison de soudage par friction entre l'élément de soudage par friction (1) et le boîtier (50).

16. Procédé de liaison selon la revendication 15, comprenant l'étape supplémentaire suivante :
- fusion (S4) de matériau pour la liaison de soudage par friction, par friction entre un côté intérieur radial du canal (52) et une première (38) et une deuxième région conique (46) de l'élément de soudage par friction (1), la première (38) et la deuxième région conique (46) étant inclinées différemment par rapport à l'axe longitudinal (L) de l'élément de soudage par friction (1).

17. Procédé de liaison selon la revendication 16, dans lequel la première région conique (38) forme un angle α > 90° avec l'axe longitudinal (L) de l'élément de soudage par friction (1) et la deuxième région conique (46) forme un angle β < 90° avec l'axe longitudinal (L) de l'élément de soudage par friction (1).

18. Procédé de liaison selon l'une des revendications 15 à 17, présentant l'étape supplémentaire suivante :
- préchauffage (S0) de l'élément de soudage par friction (1) et/ou du canal (52) dans le boîtier (50), pour soutenir la fabrication d'une liaison de soudage par friction.
